(19) Europäisches Patentamt

European Patent Office

Office européen des brevets

(11) Veröffentlichungsnummer: **0 184 653 B1**

(12) # EUROPÄISCHE PATENTSCHRIFT

(45) Veröffentlichungstag der Patentschrift: **29.04.92**

(21) Anmeldenummer: **85113681.2**

(22) Anmeldetag: **28.10.85**

(51) Int. Cl.⁵: **H02J 3/34**, H02P 9/00

(54) **Verfahren und Hochlaufeinrichtung zum Hochfahren eines rotierenden Frequenzumformers.**

(30) Priorität: **13.12.84 DE 3445417**

(43) Veröffentlichungstag der Anmeldung:
**18.06.86 Patentblatt 86/25**

(45) Bekanntmachung des Hinweises auf die
Patenterteilung:
**29.04.92 Patentblatt 92/18**

(84) Benannte Vertragsstaaten:
**AT CH DE LI SE**

(56) Entgegenhaltungen:
**EP-A- 0 026 374
DE-A- 1 488 978
DE-A- 2 062 853
US-A- 1 937 498**

**TECHN. MITT. AEG-TELEFUNKEN, Band 63,
Nr. 7, 1973, Seiten 249-253; H. BETZ: "Der
Netzkupplungsumformer Neu-Ulm, eine Anlage zur Stromversorgung der Deutschen
Bundesbahn"**

**Techn. Mitt. AEG-Telefunken 63 (1973), S.
273-278**

(73) Patentinhaber: **BBC Brown Boveri AG
Haselstrasse
CH-5401 Baden(CH)**

(72) Erfinder: **Bruggisser, Walter Leo
Schönbühlstrasse 33
CH-5430 Wettingen(CH)**
Erfinder: **Knaffl, Berislav
Lindenhof 25
Ch-5430 Wettingen(CH)**
Erfinder: **Schäfer, René
Gerstenweg 7
CH-5034 Suhr(CH)**

## Beschreibung

Bei der Erfindung wird ausgegangen von einem Verfahren zum Hochfahren eines rotierenden Frequenzumformers nach dem Oberbegriff der Patentansprüche 1 und 2. Die Erfindung betrifft auch eine Hochlaufeinrichtung zum Hochfahren eines rotierenden Frequenzumformers.

Mit dem Oberbegriff der Patentansprüche 1 + 2 nimmt die Erfindung Bezug auf einen Stand der Technik von Verfahren zum Hochfahren eines rotierenden Frequenzumformers, wie er in Techn. Mitt. AEG-Telefunken 63 (1973) 7, S. 249 - 253 beschrieben ist. Der Hochlauf der Frequenzumformergruppe 50/16$^2$/3 Hz erfolgt mit Hilfe einer Dreiphasen-Asynchronmaschine mit reduzierter Spannung mittels eines Anlasstransformators. Im Läuferkreis des Rotors ist dabei ein Flüssigkeitsanlasser eingeschaltet, dessen Regelung den Anfahrstrom im Ständer der Maschine auf etwa Nennstrom konstant hält. Die Anlaufzeit beträgt etwa 100 s. Nach Erreichen der Nenndrehzahl erfolgt die Einspeisung des Läuferkreises der Asynchronmaschine durch einen Steuerumrichter, der Strom und Spannung mit Schlupffrequenz erzeugt und damit die Drehzahl der Asynchronmaschine reguliert. Nach Zuschaltung der Erregung auf die Einphasen-Synchronmaschine, kann diese mit dem Netz synchronisiert werden.

Dieses Hochlaufverfahren erfordert
- einen grossen Aufwand an Starkstrom-Hilfseinrichtungen,
- viele Schalthandlungen im Starkstromteil beim Hochlauf,
- hohe Rotorspannungsfestigkeit beim Schalten,
- eine Auslegung der Umformergruppe für Einschaltstromstösse beim Umschalten und Zuschalten ans Netz.

Mit dem Oberbegriff des Patentanspruchs 9 nimmt die Erfindung auf einen Stand der Technik Bezug, wie er in der Techn. Mitt. AEG-Telefunken 63 (1973) 7, S. 273 - 278 beschrieben ist. Diese Veröffentlichung befasst sich jedoch nicht mit dem Hochlauf, sondern mit der Synchronisierung eines Netzkupplungsumformers.

Zum einschlägigen Stand der Technik wird noch auf die DE-A-1 488 978 verwiesen, die eine über einen Umrichter angesteuerte Asynchronmaschine zum Antrieb von Turbosätzen und zum Anwerfen und Drehen von Gasturbinen offenbart. Dabei kann die Asynchronmaschine durch den Umrichter wahlweise über den Ständer oder Rotor eingespeist werden.

Die Erfindung, wie sie in den Patentansprüchen 1, 2 und 9 definiert ist, löst die Aufgabe, ein Verfahren und eine Hochlaufeinrichtung zum Hochfahren eines rotierenden Frequenzumformers anzugeben, die ein Hochfahren eines rotierenden Frequenzumformers mit einem geringeren Aufwand an Apparaten und Einrichtungen ermöglichen. Gleichzeitig sollen hohe Rotorspannungen im Stillstand und beim Schalten sowie Einschaltstösse beim Umschalten und Zuschalten der Frequenzumformergruppe an die beiden Wechselstromnetze reduziert werden.

Ein Vorteil der Erfindung besteht darin, dass der Anlasstransformator, der Anlasswiderstand sowie zugehörige Schalter eingespart werden können, so dass eine erhebliche Verbilligung der Frequenzumformergruppe resultiert. Der ohnedies vorhandene Direktumrichter kann als Speisequelle für den Hochlauf verwendet werden.

Die Erfindung wird nachstehend anhand von Ausführungsbeispielen erläutert. Es zeigen:

Fig. 1    eine Schaltung zum Hochfahren eines rotierenden Frequenzumformers mit einem Gleichspannungserreger für die Synchronmaschine und

Fig. 2    eine Schaltung gemäss Fig. 1 ohne Gleichspannungserreger.

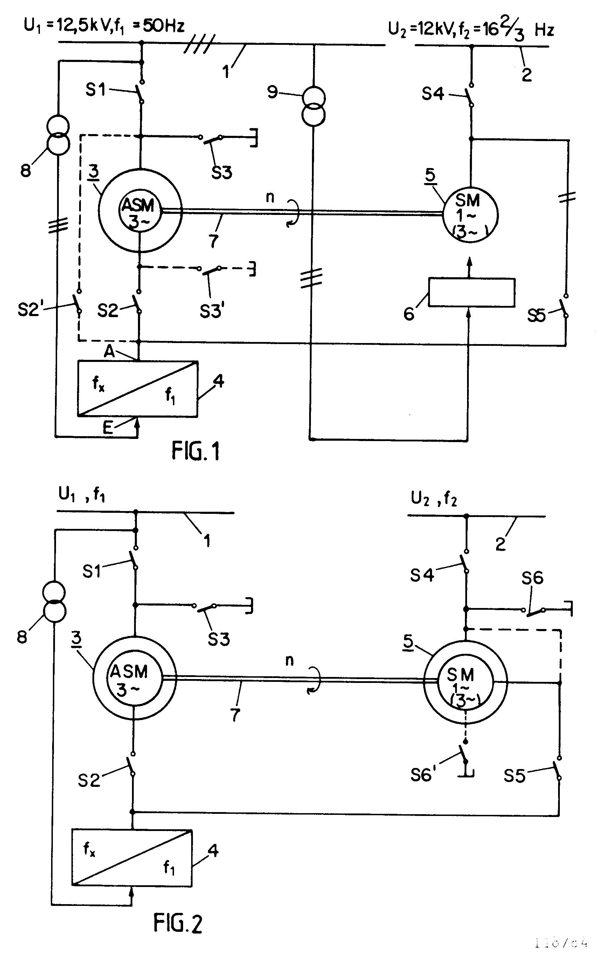

In Fig. 1 ist mit 1 ein dreiphasiges Wechselstromnetz bzw. ein Drehstromnetz mit einer Wechselspannung von $U_1$ = 12,5 kV und einer Netzfrequenz $f_1$ = 50 Hz bezeichnet und mit 2 ein einphasiges Wechselstromnetz mit einer Wechselspannung von $U_2$ = 12 kV und einer Netzfrequenz von $f_2$ = 16$^2$/3 Hz, wie es für Eisenbahnbetrieb üblich ist. Das Drehstromnetz 1 ist über einen Schalter S1 mit den Statorwicklungen einer Asynchronmaschine 3 verbunden. Andererseits sind die Statorwicklungen der Asynchronmaschine 3 über einen Schalter S3 kurzschliessbar. Die Rotorwicklungen der Asynchronmaschine 3 stehen über einen Schalter S2 mit einem Frequenzausgang A eines Umrichters bzw. Direktumrichters 4 in Verbindung, an dem eine einstellbare Frequenz $f_x$ zwischen 0 Hz und 25 Hz abgreifbar ist. Ein 3 x 3phasiger Eingang E des Direktumrichters 4 ist über einen Transformator 8, der 3 x 3 Phasen aufweist, an das Drehstromnetz 1 angeschlossen.

Wie in Fig. 1 gestrichelt angedeutet ist, können auch die Statorwicklungen der Asynchronmaschine 3 über einen Schalter S2' mit dem Ausgang A des Umrichters 4 verbunden sein; in diesem Fall müssen die Rotorwicklungen der Asynchronmaschine 3 über einen Schalter S3' kurzgeschlossen werden.

Der Rotor der Asynchronmaschine 3 ist über eine Kupplungswelle 7 mit dem Rotor einer Einphasen-Synchronmaschine 5 starr gekuppelt. n bezeichnet die Drehzahl der Kupplungswelle 7. Die Statorwicklung der Synchronmaschine 5 ist über einen Schalter S4 mit dem einphasigen Wechselstromnetz 2 und über einen weiteren Schalter S5 mit dem Ausgang A des Umrichters 4 verbunden. Die Rotorwicklung der Synchronmaschine 5 ist von einem Gleichspannungserreger 6 gespeist, der eingangsseitig über einen Transformator 9 an das Drehstromnetz 1 angeschlossen ist.

Der Hochlauf der Synchronmaschine 5 erfolgt in 3 Stufen mit variabler Frequenz am Ausgang A des Umrichters 4 von 0 Hz bis ca. 20 Hz. Die Nenndrehzahl der Umformergruppe beträgt 500 U/min (U = Umdrehungen).

1. Stufe: Die Schalter S1, S4 und S5 sind offen, die Schalter S2 bzw. S2' und S3 bzw. S3' geschlossen. Die einstellbare Frequenz $f_x$ am Ausgang A des Umrichters 4 wird von 0 Hz bis über 20 Hz erhöht, wodurch sich die Frequenz an den Statorwicklungen der Asynchronmaschine 3 ebenfalls von 0 Hz auf über 20 Hz erhöht und die Drehzahl n der Kupplungswelle 7 beispielsweise von 0 U/min auf 200 U/min, entsprechend 40 % der Nenndrehzahl, ansteigt.

2. Stufe: Umschaltung des Umrichters auf die mit dem Wechselstromnetz zusammenwirkende Wicklung der erregten Einphasenmaschine 5 und Hochlauf mit 20/3 = 6,66 Hz $f_x \leq$ 17,33 Hz (20 Hz), wobei der Umrichter einphasig angeschlossen ist. Die Schalter S1, S2 bzw. S2', S3 bzw. S3' und S4 sind offen, während der Schalter S5 geschlossen ist. Die Drehzahl n der Kupplungswelle 7 erhöht sich von 200 U/min auf 520 (600) U/min, entsprechend 104 % (120 %) der Nenndrehzahl.

3. Stufe: Umschalten des Ausgangs A des Umrichters 4 von der Synchronmaschine 5 auf die Rotorwicklungen der Asynchronmaschine 3 (als Erregung) mit offenen Statorwicklungen der Asynchronmaschine 3. Ausgangslage: Die Schalter S1, S3 bzw. S3' und S2', falls vorhanden, S4 und S5 sind offen, während der Schalter S2 geschlossen ist.

Danach erfolgt die Synchronisation der Asynchronmaschine 3 mit dem Drehstromnetz 1 im natürlichen, reibungsbedingten Auslauf, d.h., bei n = 520 U/min ... 480 U/min, entsprechend 104 % ... 96 % der Nenndrehzahl, über den Umrichter 4 in über-/untersynchroner Kaskadenschaltung. Dabei erfolgt die Erregung der Asynchronmaschine 3 so, dass die Wechselspannung am Ausgang der Statorwicklungen der Asynchronmaschine 3 gleich der Wechselspannung $U_1$ des Drehstromnetzes 1 wird. Dann wird der Schalter S1 im geeigneten Moment (phasensynchron) geschlossen, so dass die Asynchronmaschine 3 stossfrei an das Drehstromnetz 1 angeschlossen wird. Im synchronisierten Zustand sind die Schalter S3, S4 und S5 offen und die Schalter S1 und S2 geschlossen.

Anschliessend erfolgt die Synchronisation der Einphasen-Synchronmaschine 5 mit dem Bahnbzw. Wechselstromnetz 2 in bekannter Weise. Mittels des Umrichters 4 wird den Rotorwicklungen der Asynchronmaschine 3 ein schlupffrequenter Strom im Bereich von etwa -2,5 Hz bis +2,5 Hz eingeprägt und dadurch die Drehzahl variiert, bis die Synchronisation der entsprechend erregten Synchronmaschine 5 erreicht ist. Danach wird der Schalter S4 geschlossen, und die Umformergruppe ist zur Leistungsübertragung zwischen dem 50-Hz- und dem 16²/3-Hz-Netz bereit.

Anstelle der oben beschriebenen 2. Hochlaufstufe kann auch folgende Variante angewandt werden: Die mit ca. 1/3 der Nenndrehzahl drehende Einphasen-Synchronmaschine 5 wird mittels des Schalters S4 an das Wechselstromnetz 2 geschaltet und ohne Gleichstromerregung asynchron hochgefahren, dann erregt und am Wechselstromnetz 2 belassen. Dabei ist die Synchronmaschine 5 zusätzlich zur Gleichstromerregerwicklung mit einer Dämpferwicklung (Kurzschlusswicklung) ausgestattet und wird als Einphasen-Kurzschlussläufermaschine betrieben. Es kann auch die Gleichstromerregerwicklung kurzgeschlossen werden.

Bei der Schaltung gemäss Fig. 2 ist im Unterschied zu der Schaltung von Fig. 1 beim Hochlauf für die Synchronmaschine 5 kein Gleichstromerreger 6 erforderlich, dafür ist zum Kurzschluss der mit dem Wechselstromnetz 2 zusammenwirkenden Wicklung der Synchronmaschine 5 ein Schalter S6 vorgesehen, der im geschlossenen Zustand diese Wicklung kurzschliesst. Der Ausgang des Umformers 4 ist über den Schalter S5 mit der Rotorwicklung der Synchronmaschine 5 verbunden.

Gemäss einer anderen, gestrichelt angedeuteten Ausführung wird die Statorwicklung der Synchronmaschine 5 über den Schalter 55 vom Umrichter 4 gespeist, während die Rotorwicklung der Synchronmaschine 5 über einen Schalter S6' kurzgeschlossen ist.

Erfindungsgemässe Frequenzumformergruppen werden hauptsächlich für die Uebertragung elektrischer Energie im Bereich von 8 MW - 90 MW von einem Landesnetz mit einer Frequenz von 50 Hz oder 60 Hz in ein Bahnnetz mit einer anderen Frequenz von üblicherweise 16²/3 Hz verwendet. Es kann aber auch Energie von dem Bahnnetz in das Landesnetz übertragen werden.

Die Schalter S3 und S5 können für vergleichsweise kleine Schaltströme ausgelegt sein, da sie praktisch leistungslos geschaltet werden.

Anstelle der Einphasen-Synchronmaschine 5 ist selbstverständlich eine Mehrphasen-Synchronmaschine vorzusehen, wenn das Wechselstromnetz 2 mehrphasig ist.

**Patentansprüche**

1. Verfahren zum Hochfahren eines rotierenden Frequenzumformers mit einer statischen unter/übersynchronen Stromrichterkaskade
   a) mit einer Asynchronmaschine (3),
   b) die mit einem ersten Wechselstromnetz (1) mit einer 1. Netzfrequenz ($f_1$) bei Erreichen dieser 1. Netzfrequenz in Wirkverbindung gebracht wird,
   c) die von einem Umrichter (4) gesteuert Wird und
   d) mit einer Synchronmaschine (5) starr gekuppelt ist,
   e) welche Synchronmaschine mit einem 2. Wechselstromnetz (2) mit einer von der 1. Netzfrequenz verschiedenen 2. Netzfrequenz ($f_2$) in Wirkverbindung gebracht werden kann,
   dadurch gekennzeichnet,
   f) dass der Umrichter (4) zu Beginn des Anfahrens in einer 1. Anfahrstufe an den Stator der Asynchronmaschine (3) angeschlossen wird,
   g) dass im wesentlichen gleichzeitig mit dem Anschliessen des Umrichters (4) an den Stator der Asynchronmaschine (3) der Rotor dieser Asynchronmaschine kurzgeschlossen wird,
   h) dass nach Erreichen einer Drehzahl der Asynchronmaschine (3), entsprechend einer Frequenz von mindestens 10 % der Nennfrequenz ($f_1$) des 1. Wechselstromnetzes (1), die Speisung der Asynchronmaschine (3) und der Kurzschluss des Rotors der Asynchronmaschine unterbrochen wird,
   i) dass der Umrichter (4) von der Speisung der Asynchronmaschine (3) auf eine Speisung der mit dem Wechselstromnetz zusammenwirkenden Wicklung der Synchronmaschine (5) umgeschaltet wird,
   j) dass der Stator/Rotor der Synchronmaschine (5) danach während einer 2. Anfahrstufe von dem Umrichter (4) gespeist wird und

   k) in diesem Schaltzustand während der 2. Anfahrstufe so lang verbleibt, bis mindestens die Nenndrehzahl der Synchronmaschine entsprechend der 2. Netzfrequenz ($f_2$) des 2. Wechselstromnetzes (2) erreicht ist,
   l) während gleichzeitig der Rotor/Stator der Synchronmaschine kurzgeschlossen ist,
   m) dass die Asynchronmaschine (3) während einer 3. Anfahrstufe mit dem 1. Wechselstromnetz (1) synchronisiert wird und
   n) dass danach der Stator der Asynchronmaschine (3) an das Wechselstromnetz (1) angeschlossen wird.

2. Verfahren zum Hochfahren eines rotierenden Frequenzumformers mit einer statischen unter/übersynchronen Stromrichterkaskade
   a) mit einer Asynchronmaschine (3),
   b) die mit einem 1. Wechselstromnetz (1) mit einer 1. Netzfrequenz ($f_1$) bei Erreichen dieser 1. Netzfrequenz in Wirkverbindung gebracht wird,
   c) die von einem Umrichter (4) gesteuert wird und
   d) mit einer Synchronmaschine (5) starr gekuppelt ist,
   e) welche Synchronmaschine mit einem 2. Wechselstromnetz (2) mit einer von der 1. Netzfrequenz verschiedenen 2. Netzfrequenz ($f_2$) in Wirkverbindung gebracht werden kann,
   f) wobei der Umrichter (4) zu Beginn des Anfahrens in einer 1. Anfahrstufe an den Rotor der Asynchronmaschine (3) angeschlossen wird,
   dadurch gekennzeichnet,
   g) dass im wesentlichen gleichzeitig mit dem Anschliessen des Umrichters (4) an den Rotor der Asynchronmaschine (3) der Stator dieser Asynchronmaschine kurzgeschlossen wird,
   h) dass nach Erreichen einer Drehzahl der Asynchronmaschine (3), entsprechend einer Frequenz von mindestens 10 % der Nennfrequenz ($f_1$) des 1. Wechselstromnetzes (1), die Speisung der Asynchronmaschine (3) und der Kurzschluss des Stators der Asynchronmaschine unterbrochen wird,
   i) dass der Umrichter (4) von der Speisung der Asynchronmaschine (3) auf eine Speisung der mit dem Wechselstromnetz zusammenwirkenden Wicklung der Synchronmaschine (5) umgeschaltet wird,
   j) dass der Stator/Rotor der Synchronmaschine (5) danach während einer 2. Anfahrstufe von dem Umrichter (4) gespeist wird und

k) in diesem Schaltzustand während der 2. Anfahrstufe so lang verbleibt, bis mindestens die Nenndrehzahl der Synchronmaschine entsprechend der 2. Netzfrequenz ($f_2$) des 2. Wechselstromnetzes (2) erreicht ist,

l) während gleichzeitig der Rotor/Stator der Synchronmaschine kurzgeschlossen ist,

m) dass die Asynchronmaschine (3) während einer 3. Anfahrstufe mit dem 1. Wechselstromnetz (1) synchronisiert wird und

n) dass danach der Stator der Asynchronmaschine (3) an das Wechselstromnetz (1) angeschlossen wird.

3. Verfahren nach Anspruch 1 oder 2, dadurch gekennzeichnet, dass nach Erreichen einer Frequenz im Bereich von 40 % - 50 % der Nennfrequenz ($f_1$) des ersten Wechselstromnetzes (1) die Speisung der Asynchronmaschine (3) und der Kurzschluss des Rotors/Stators der Asynchronmaschine unterbrochen wird.

4. Verfahren nach einem der Ansprüche 1 bis 3, dadurch gekennzeichnet, dass die Synchronmaschine (5) während der 2. Anfahrstufe gleichstrommässig erregt wird.

5. Verfahren nach einem der Ansprüche 1 bis 3, dadurch gekennzeichnet,

a) dass der Stator der Synchronmaschine (5) zu Beginn der 2. Anfahrstufe mit dem 2. Wechselstromnetz (2) verbunden wird und

b) die Synchronmaschine (5) ohne Gleichstromerregung asynchron mittels des Umrichters (4) hochgefahren wird.

6. Verfahren nach einem der Ansprüche 1 bis 5, dadurch gekennzeichnet, dass der Umrichter (4) am Ende der 2. Anfahrstufe an den Rotor der Asynchronmaschine (3) angeschlossen wird, wobei der Stator der Asynchronmaschine (3) offen ist.

7. Verfahren nach einem der Ansprüche 1 bis 4, dadurch gekennzeichnet,

a) dass nach dem Anschluss der Asynchronmaschine (3) an das 1. Wechselstromnetz (1) die Synchronmaschine (5) mittels des Umrichters (4) über die Asynchronmaschine (3) und eine Kupplungswelle (7) mit dem 2. Wechselstromnetz (2) synchronisiert wird und

b) dass danach die mit dem 2. Wechselstromnetz (2) zusammenwirkende Wicklung der Synchronmaschine (5) an das 2. Wechselstromnetz (2) angeschlossen wird.

8. Verfahren nach Anspruch 7, dadurch gekennzeichnet, dass der Umrichter (4) am Ende der 2. Anfahrstufe an den Rotor der Asynchronmaschine (3) angeschlossen wird, wobei der Stator der Asynchronmaschine (3) offen ist.

9. Hochlaufeinrichtung zum Hochfahren eines rotierenden Frequenzumformers mit einer statischen unter/übersynchronen Stromrichterkaskade

a) mit einer Asynchronmaschine (3),

b) deren Statorwicklungen über mindestens einen 1. Schalter (S1) mit einem 1. Wechselstromnetz (1) mit einer 1. Netzfrequenz ($f_1$) in Wirkverbindung stehen,

c) deren Rotorwicklungen über mindestens einen 2. Schalter (S2) mit dem Frequenzausgang (A) eines Umrichters (4) in Wirkverbindung stehen und

d) deren Rotor mit dem Rotor einer Synchronmaschine (5) starr gekuppelt ist,

e) wobei die Synchronmaschine (5) über mindestens einen 4. Schalter (S4) mit einem 2. Wechselstromnetz (2) mit einer 2. Netzfrequenz ($F_2$) in Wirkverbindung steht,

f) wobei die Statorwicklungen der Asynchronmaschine (3), die mit dem 1. Schalter (S1) verbunden sind, über einen 3. Schalter (S3) kurzschliessbar sind,

dadurch gekennzeichnet,

g) dass der Umrichter (4) über einen 5. Schalter (S5) mit einer Wicklung der Synchronmaschine (5) in Wirkverbindung steht und

h) dass die Wicklung der Synchronmaschine (5), die mit dem 4. Schalter (S4) verbunden ist, über einen 6. Schalter (S6') kurzschliessbar ist.

**Claims**

1. Method for starting a rotating frequency converter comprising a subsynchronous/oversynchronous static converter cascade

a) with an asynchronous machine (3),

b) which is effectively connected to a first alternating-current system (1) having a 1st system frequency ($f_1$) when this 1st system frequency is reached,

c) which is controlled by an AC converter (4) and

d) is rigidly coupled to a synchronous machine (5),

e) which synchronous machine can be effectively connected to a 2nd alternating-current system (2) having a 2nd system

frequency ($f_2$) which differs from the 1st system frequency,

characterised in that

   f) at the beginning of the starting, the AC converter (4) is connected to the stator of the asynchronous machine (3) in a 1st starting stage,

   g) that essentially at the same time as the AC converter (4) is connected to the stator of the asynchronous machine (3), the rotor of this asynchronous machine is shortcircuited,

   h) that after a speed of the asynchronous machine (3) corresponding to a frequency of at least 10 % of the nominal frequency ($f_1$) of the 1st alternating-current system (1) has been reached, the feeding of the asynchronous machine (3) and the shortcircuit of the rotor of the asynchronous machine is interrupted,

   i) that the AC converter (4) is switched from feeding the asynchronous machine (3) to feeding the winding of the synchronous machine (5) operating in conjunction with the alternating-current system,

   j) that the stator/rotor of the synchronous machine (5) is thereafter fed by the AC converter (4) during a 2nd starting stage, and

   k) remains in this switched state during the 2nd starting stage until at least the nominal speed of the synchronous machine corresponding to the 2nd system frequency ($f_2$) of the 2nd alternating-current system (2) is reached,

   l) whilst, at the same time, the rotor/stator of the synchronous machine is shortcircuited,

   m) that the asynchronous machine (3) is synchronized to the 1st alternating-current system (1) during a 3rd starting stage, and

   n) that the stator of the asynchronous machine (3) is thereafter connected to the alternating-current system (1).

**2.** Method for starting a rotating frequency converter comprising a subsynchronous/oversynchronous static converter cascade

   a) with an asynchronous machine (3)

   b) which is effectively connected to a 1st alternating-current system (1) having a 1st system frequency ($f_1$) when this 1st system frequency is reached,

   c) which is controlled by an AC converter (4) and

   d) is rigidly coupled to a synchronous machine (5),

   e) which synchronous machine can be effectively connected to a 2nd alternating-current system (2) having a 2nd system frequency ($f_2$) which differs from the 1st system frequency,

   f) the AC converter (4) being connected to the rotor of the asynchronous machine (3) in a 1st starting stage at the beginning of the starting,

characterised in that

   g) essentially at the same time as the AC converter (4) is connected to the rotor of the asynchronous machine (3), the stator of this asynchronous machine is shortcircuited,

   h) that after a speed of the asynchronous machine (3) corresponding to a frequency of at least 10 % of the nominal frequency ($f_1$) of the 1st alternating-current system (1) has been reached, the feeding of the asynchronous machine (3) and the shortcircuit of the stator of the asynchronous machine is interrupted,

   i) that the AC converter (4) is switched from feeding the asynchronous machine (3) to feeding the winding of the synchronous machine (5) operating in conjunction with the alternating-current system,

   j) that the stator/rotor of the synchronous machine (5) is thereafter fed by the AC converter (4) during a 2nd starting stage, and

   k) remains in this switched state during the 2nd starting stage until at least the nominal speed of the synchronous machine corresponding to the 2nd system frequency ($f_2$) of the 2nd alternating-current system (2) is reached,

   l) whilst, at the same time, the rotor/stator of the synchronous machine is shortcircuited,

   m) that the asynchronous machine (3) is synchronised to the 1st alternating-current system (1) during a 3rd starting stage, and

   n) that the stator of the asynchronous machine (3) is thereafter connected to the alternating-current system (1).

**3.** Method according to Claim 1 or 2, characterised in that after a frequency within the range of 40 % - 50 % of the nominal frequency ($f_1$) of the first alternating-current system (1) has been reached, the feeding of the asynchronous machine (3) and the shortcircuit of the rotor/stator of the asynchronous machine is interrupted.

**4.** Method according to one of Claims 1 to 3, characterised in that the synchronous machine (5) is DC-excited during the 2nd starting stage.

5. Method according to one of Claims 1 to 3, characterised in that
   a) the stator of the synchronous machine (5) is connected to the 2nd alternating-current system (2) at the beginning of the 2nd starting stage, and
   b) the synchronous machine (5) is asynchronously started by means of the AC converter (4), without DC excitation.

6. Method according to one of Claims 1 to 5, characterised in that the AC converter (4) is connected to the rotor of the asynchronous machine (3) at the end of the 2nd starting stage, the stator of the asynchronous machine (3) being open.

7. Method according to one of Claims 1 to 4, characterised in that
   a) the synchronous machine (5) is synchronised to the 2nd alternating-current system (2) by means of the AC converter (4) via the asynchronous machine (3) and a coupling shaft (7) after the asynchronous machine (3) has been connected to the 1st alternating-current system (1), and
   b) that the winding of the synchronous machine (5) operating in conjunction with the 2nd alternating-current system (2) is thereafter connected to the 2nd alternating-current system (2).

8. Method according to Claim 7, characterised in that the AC converter (4) is connected to the rotor of the asynchronous machine (3) at the end of the 2nd starting stage, the stator of the asynchronous machine (3) being open.

9. Starting device for starting a rotating frequency converter comprising a subsynchronous/oversynchronous static converter cascade
   a) with an asynchronous machine (3),
   b) the stator windings of which are effectively connected to a 1st alternating-current system (1) having a 1st system frequency ($f_1$) via at least one 1st switch (S1),
   c) the rotor windings of which are effectively connected to the frequency output (A) of an AC converter (4) via at least one 2nd switch (S2), and
   d) the rotor of which is rigidly coupled to the rotor of a synchronous machine (5),
   e) the synchronous machine (5) being effectively connected to a 2nd alternating-current system (2) having a 2nd system frequency ($f_2$) via a 4th switch (S4),

f) in which arrangement the stator windings of the asynchronous machine (3), which are connected to the 1st switch (S1), can be shortcircuited via a 3rd switch (S3), characterised in that
   g) the AC converter (4) is effectively connected to a winding of the synchronous machine (5) via a 5th switch (S5), and
   h) that the winding of the synchronous machine (5), which is connected to the 4th switch (S4), can be shortcircuited via a 6th switch (S6').

**Revendications**

1. Procédé pour la mise en route d'un convertisseur de fréquence rotatif avec un convertisseur statique en cascade hypo-/hypersynchrone,
   a) comportant une machine asynchrone (3),
   b) qui est mise en liaison active avec un premier réseau à courant alternatif (1) présentant une première fréquence de réseau ($f_1$), lorsque cette première fréquence de réseau est atteinte,
   c) qui est commandée par un convertisseur (4), et
   d) qui est accouplée rigidement à une machine synchrone (5),
   e) la machine synchrone pouvant être mise en liaison active avec un second réseau à courant alternatif (2) présentant une seconde fréquence de réseau ($f_2$) différente de la première fréquence de réseau,
      caractérisé en ce
   f) que le convertisseur (4), au début du démarrage, dans un premier stade de démarrage, est connecté au stator de la machine asynchrone (3),
   g) qu'en substance à l'instant où le convertisseur (4) est connecté au stator de la machine asynchrone (3), le rotor de cette machine asynchrone est court-circuité,
   h) que, lorsque l'on atteint un régime de la machine asynchrone (3) correspondant à une fréquence d'au moins 10% de la fréquence nominale ($f_1$) du premier réseau à courant alternatif (1), l'alimentation de la machine asynchrone (3) et le court-circuit du rotor de la machine asynchrone sont interrompus,
   i) que le convertisseur (4) est commuté de l'alimentation de la machine asynchrone (3) sur une alimentation du bobinage de la machine synchrone (5) coopérant avec le réseau à courant alternatif,

j) que le stator/rotor de la machine synchrone (5) est ensuite alimenté pendant un deuxième stade de démarrage par le convertisseur (4) et

k) reste dans cet état de commutation d'alimentation, pendant le deuxième stade de démarrage, jusqu'à ce qu'au moins le régime nominal de la machine synchrone correspondant à la seconde fréquence de réseau ($f_2$) du second réseau à courant alternatif (2) soit atteint,

l) alors que le rotor/stator de la machine synchrone est, à cet instant même, court-circuité,

m) que la machine asynchrone (3) est synchronisée pendant un troisième stade de démarrage avec le premier réseau à courant alternatif (1), et

n) qu'ensuite le stator de la machine asynchrone (3) est connecté au réseau à courant alternatif (1).

2. Procédé pour la mise en route d'un convertisseur de fréquence rotatif avec un convertisseur statique en cascade hypo-/hypersynchrone,

a) comportant une machine asynchrone (3),

b) qui est mise en liaison active avec un premier réseau à courant alternatif (1) présentant une première fréquence de réseau ($f_1$), lorsque cette première fréquence de réseau est atteinte,

c) qui est commandée par un convertisseur (4), et

d) qui est accouplée rigidement à une machine synchrone (5),

e) la machine synchrone pouvant être mise en liaison active avec un second réseau à courant alternatif (2) présentant une seconde fréquence de réseau ($f_2$) différente de la première fréquence de réseau,

f) le convertisseur (4), au début du démarrage, dans un premier stade de démarrage, étant connecté au rotor de la machine asynchrone (3),

caractérisé en ce

g) qu'en substance à l'instant où le convertisseur (4) est connecté au rotor de la machine asynchrone (3), le stator de cette machine asynchrone est court-circuité,

h) que, lorsque l'on atteint un régime de la machine asynchrone (3) correspondant à une fréquence d'au moins 10% de la fréquence nominale ($f_1$) du premier réseau à courant alternatif (1), l'alimentation de la machine asynchrone (3) et le court-circuit du stator de la machine asynchrone sont interrompus,

i) que le convertisseur (4) est commuté de l'alimentation de la machine asynchrone (3) sur une alimentation du bobinage de la machine synchrone (5) coopérant avec le réseau à courant alternatif,

j) que le stator/rotor de la machine synchrone (5) est ensuite alimenté pendant un deuxième stade de démarrage par le convertisseur (4), et

k) reste dans cet état de commutation d'alimentation, pendant le deuxième stade de démarrage, jusqu'à ce qu'au moins le régime nominal de la machine synchrone correspondant à la seconde fréquence de réseau ($f_2$) du second réseau à courant alternatif (2) soit atteint,

l) alors que le rotor/stator de la machine synchrone est, à cet instant même, court-circuité,

m) que la machine asynchrone (3) est synchronisée pendant un troisième stade de démarrage avec le premier réseau à courant alternatif (1), et

n) qu'ensuite le stator de la machine asynchrone (3) est connecté au réseau à courant alternatif (1).

3. Procédé suivant la revendication 1 ou 2, caractérisé en ce que, lorsque l'on atteint une fréquence située dans le domaine de 40 à 50% de la fréquence nominale ($f_1$) du premier réseau à courant alternatif (1), l'alimentation de la machine asynchrone (3) et le court-circuit du rotor/stator de la machine asynchrone sont interrompus.

4. Procédé suivant l'une quelconque des revendications 1 à 3, caractérisé en ce que la machine synchrone (5) est excitée au moyen de courant continu pendant le deuxième stade de démarrage.

5. Procédé suivant l'une quelconque des revendications 1 à 3, caractérisé en ce

a) que le stator de la machine synchrone (5) est relié au début du deuxième stade de démarrage au deuxième réseau à courant alternatif (2), et

b) la machine synchrone (5) est mise en route de manière asynchrone au moyen du convertisseur (4) sans excitation en courant continu.

6. Procédé suivant l'une quelconque des revendications 1 à 5, caractérisé en ce que le convertisseur (4) est connecté au rotor de la machine asynchrone (3) à la fin du second stade de démarrage, le stator de la machine asynchrone (3) étant alors ouvert.

7. Procédé suivant l'une quelconque des revendications 1 à 4, caractérisé en ce

a) que, lorsque la machine asynchrone (3) a été connectée au premier réseau à courant alternatif (1), la machine synchrone (5) est synchronisée au moyen du convertisseur (4) par l'intermédiaire de la machine asynchrone (3) et d'un arbre d'accouplement (7) avec le second réseau à courant alternatif (2), et

b) qu'ensuite le bobinage de la machine synchrone (5) coopérant avec le second réseau à courant alternatif (2) est connecté au second réseau à courant alternatif (2).

8. Procédé suivant la revendication 7, caractérisé en ce que le convertisseur (4) est connecté au rotor de la machine asynchrone (3) à la fin du deuxième stade de démarrage, le stator de la machine asynchrone (3) étant alors ouvert.

9. Dispositif de mise en route d'un convertisseur de fréquence rotatif avec un convertisseur statique en cascade hypo-/hypersynchrone

a) comportant une machine asynchrone (3),

b) dont les bobinages de stator sont en liaison active, par l'intermédiaire d'au moins un premier interrupteur (S1), avec un premier réseau à courant alternatif (1) présentant une première fréquence de réseau ($f_1$),

c) dont les bobinages de rotor sont en liaison active, par l'intermédiaire d'au moins un deuxième interrupteur (S2), avec la sortie de fréquence (A) d'un convertisseur (4), et

d) dont le rotor est accouplé rigidement au rotor d'une machine synchrone (5),

e) la machine synchrone (5) étant en liaison active, par l'intermédiaire d'au moins un quatrième interrupteur (S4), avec un deuxième réseau à courant alternatif (2) présentant une deuxième fréquence de réseau ($f_2$),

f) les bobinages de stator de la machine asynchrone (3) qui sont connectés au premier interrupteur (S1) pouvant être court-circuités par l'intermédiaire d'un troisième interrupteur (S3),

caractérisé en ce

g) que le convertisseur (4) est en liaison active, par l'intermédiaire d'un cinquième interrupteur (S5), avec un bobinage de la machine synchrone (5), et

h) que le bobinage de la machine synchrone (5), qui est connecté au quatrième interrupteur (S4), peut être court-circuité par l'intermédiaire d'un sixième interrupteur (S6').

FIG.1

FIG.2